(19) Europäisches Patentamt
European Patent Office
Office européen des brevets

(11) **EP 4 501 452 A1**

(12) **EUROPEAN PATENT APPLICATION**
published in accordance with Art. 153(4) EPC

(43) Date of publication:
05.02.2025 Bulletin 2025/06

(21) Application number: 23781297.9

(22) Date of filing: 28.03.2023

(51) International Patent Classification (IPC):
*B01J 35/00* (2024.01)  *B01J 35/04* (2006.01)
*B01J 35/10* (2006.01)  *B01J 23/52* (2006.01)
*B01J 37/02* (2006.01)  *B01J 37/08* (2006.01)
*B01D 53/86* (2006.01)

(52) Cooperative Patent Classification (CPC):
**B01J 35/56; B01D 53/86; B01J 23/52; B01J 35/60;**
**B01J 37/02; B01J 37/08;** B01J 2235/00

(86) International application number:
**PCT/KR2023/004090**

(87) International publication number:
**WO 2023/191442 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.03.2022 KR 20220038329
27.03.2023 KR 20230039825

(71) Applicant: **Quantum Cat Co., Ltd.**
**Daejeon 34028 (KR)**

(72) Inventors:
• **KANG, Shinhyun**
**Sejong 30130 (KR)**
• **LIM, Sunghwan**
**Sejong 30123 (KR)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **POROUS COMPOSITE STRUCTURE CATALYST COMPRISING CATALYST COATING LAYER OF GOLD NANOPARTICLES IMPREGNATED INTO POROUS SUPPORT**

(57) The present invention relates to a porous composite structure catalyst comprising a porous substrate and a catalyst coating layer, wherein the catalyst coating layer comprises: a porous support including mesopores; and a composite catalyst, which is gold nanoparticles impregnated into pores of the porous support.

FIG 1.

EP 4 501 452 A1

**Description**

Technical Field

The present disclosure relates to a porous composite structure catalyst including a porous substrate and a catalyst coating layer coated on the substrate, and to a porous composite structure catalyst having excellent oxidation reaction catalytic activity at room temperature and capable of rapidly converting substantially all of a reactant gas penetrating the porous substrate into a product gas.

Background Art

Transition metal nanoparticles may exhibit catalytic activity due to their high surface area, but since transition metal nanoparticles are primary particles and usually have an average particle size of 20 nm or less, mesoporous supports with pore sizes of 2-50 nm are considered preferable for supporting these nanoparticles. Mesoporous supports may be formed of metal oxide materials, and silica, aluminosilicate, titania, or the like is commonly known. Depending on the manufacturing method, mesopores of various sizes and shapes may be formed, and by controlling the content of metals or metalloids forming the framework, the concentration of acid sites and ion exchange capacity may also be controlled. Accordingly, mesoporous supports are utilized as supports for transition metal nanoparticles, and due to the characteristics of mesopores, the diffusion resistance of substances is lower than that of microporous supports, and thus they may have the advantage of a fast reaction rate.

However, the mesoporous support loaded with transition metal nanoparticles is manufactured as a powder, and should thus be coated on a porous substrate in order to be applied to a commercial catalytic reaction process. In other words, even if a highly active catalyst is developed, a scale-up operation suitable for the application environment is essential in order to finally complete the same. The catalyst design therefor may be divided into the direction of manufacturing a structural catalyst in the form of a pellet, bead, or honeycomb monolith. The honeycomb monolith structure is considered important as a standard structure, but it is limited in the role thereof as a support for the catalyst powder because a specific surface area thereof is significantly small, less than 1.0 m$^2$/g.

In addition, since the catalytic reaction process is usually operated at high temperatures, Ostwald ripening of nanoparticles, particle migration, and coalescence easily occur, making it difficult to maintain long-term catalytic activity, and there has been a problem of the coated catalyst powder being desorbed from the porous substrate during long-term operation.

Meanwhile, US 2019-0255520 A1 discloses a mesoporous silica support supporting gold nanoparticles, having catalytic activity at room temperature, and since it has catalytic activity at room temperature, the stress generated by the heating and cooling cycle of the porous substrate is small, and thus the problem of desorption may be alleviated. However, in order to maintain excellent catalytic activity even under harsh conditions such as vibration, pressure and the like, the catalyst coating layer should be stably fixed on the porous substrate, and the development of a porous composite structure catalyst that has high reliability even in environments where it is operated under various harsh conditions is necessary.

(Prior art document)

(Patent document)

(Patent document 1) (Patent document 1): US 2019-0255520 A1 (Aug. 22, 2019)
(Patent document 2) (Patent document 2): KR 10-1789665 B1 (Oct. 18, 2017)

Summary of Invention

Technical Problem

An aspect of the present disclosure is to provide a porous composite structure catalyst having significantly excellent catalytic activity at room temperature and at the same time maintaining catalytic activity for a long period of time even under harsh conditions such as vibration, pressurization and the like, thereby providing high reliability.

Another aspect of the present disclosure is to provide a porous composite structure catalyst capable of substantially removing all harmful gases (impurities) in a short period of time by maintaining low gas diffusion resistance despite the porous support containing gold nanoparticles being coated on a porous substrate.

Solution to Problem

According to an aspect of the present disclosure, a porous composite structure catalyst includes a porous substrate and a catalyst coating layer coated on the substrate, wherein the catalyst coating layer includes a porous support including mesopores and a composite catalyst, a gold nanoparticle contained within pores of the porous support.

In a detailed example, the porous substrate may be a monolithic honeycomb ceramic structure or a metal foam structure.

In a detailed example, the honeycomb ceramic structure may be any one or two or more selected from the group consisting of a metal oxide, a metalloid oxide, a metal carbide, and a metalloid carbide.

In a detailed example, the catalyst coating layer may include a metal oxide unit layer in which a plurality of composite catalyst particles are dispersed, and the metal oxide unit layer may be provided by laminating a plurality of layers on each other in a thickness direction.

In a detailed example, the catalyst coating layer may be manufactured from an operation of forming a coating layer by coating an aqueous slurry containing one or more binders selected from the group consisting of an inorganic sol binder and a water-soluble polymer binder and a composite catalyst powder on the porous substrate; and an operation of sintering the porous substrate on which the coating layer is formed.

In a detailed example, the water-soluble polymer binder may be any one or two more selected from the group consisting of polyethylene glycol, polyvinyl alcohol, and poly(N-vinyl pyrrolidone).

In a detailed example, the porous support may be a metal oxide or metalloid oxide porous support.

In a detailed example, a diameter of the nanoparticle may be 1 to 20 nm.

In a detailed example, a radial distribution function obtained by Fourier transforming an EXAFS (Extended X-ray absorption fine structure) spectrum of the catalyst coating layer may satisfy the following Formula 1.

[Formula 1]

$$(DH2/DH1) < 0.3$$

In the Formula 1, DH1 is a height of a peak at an interatomic distance D1, DH2 is a height of a peak at an interatomic distance D2, and D1 and D2 satisfy the following Formulas 2 and 3, respectively:

[Formula 2]

$$0.8 \leq (D1/D3) \leq 0.95$$

[Formula 3]

$$0.6 \leq (D2/D3) \leq 0.7$$

In the Formulas 2 and 3, D3 represents an interatomic distance of a bulk Au-Au bond existing at 2.8 to 3.0 Å.

In a detailed example, a radial distribution function obtained by Fourier transforming an EXAFS (Extended X-ray absorption fine structure) spectrum of the catalyst coating layer may satisfy the following Formula 4.

[Formula 2]

$$(DA2/DA1) < 0.25$$

In the formula 4, DA1 is an area of a peak at an interatomic distance D1, DA2 is an area of a peak at an interatomic distance D2, and D1 and D2 satisfy the formulas 2 and 3, respectively.

In a detailed example, a bimodal peak may be provided in an interatomic distance range of 2.2 to 3.0 Å in a radial distribution function obtained by Fourier transforming an EXAFS (Extended X-ray absorption fine structure) spectrum of the catalyst coating layer.

In a detailed example, the porous composite structure catalyst may be for an oxidation reaction of carbon monoxide, an aldehyde compound, or a hydrocarbon compound.

According to another aspect of the present disclosure, a method of removing a harmful gas includes an operation of supplying a gas stream containing at least one harmful gas selected from the group consisting of carbon monoxide, aldehyde compounds, and hydrocarbon compounds; and an operation of contacting the porous composite structure catalyst according to any one of claims 1 to 12 with the gas stream and oxidizing the harmful gas.

In a detailed example, the oxidizing may be performed at 0°C to 60°C.

In a detailed example, the harmful gas may be removed at a removal rate of 90% or higher under a space velocity condition of 12,000 hr$^{-1}$ by an oxidation reaction.

Advantageous Effects of Invention

The porous composite structure catalyst according to the present disclosure has significantly excellent catalytic activity at room temperature, and at the same time, maintains long-term catalytic activity even under harsh conditions such as vibration and pressurization, so that it may have high reliability. In addition, the porous support in which gold nanoparticles are incorporated on the porous substrate is stably fixed, so that it may have excellent long-term stability.

The porous composite structure catalyst according to the present disclosure may substantially remove all harmful gases (impurities) in a short period of time by maintaining a low gas diffusion resistance even though the porous support in which gold nanoparticles are incorporated is coated on the porous substrate.

Brief Description of Drawings

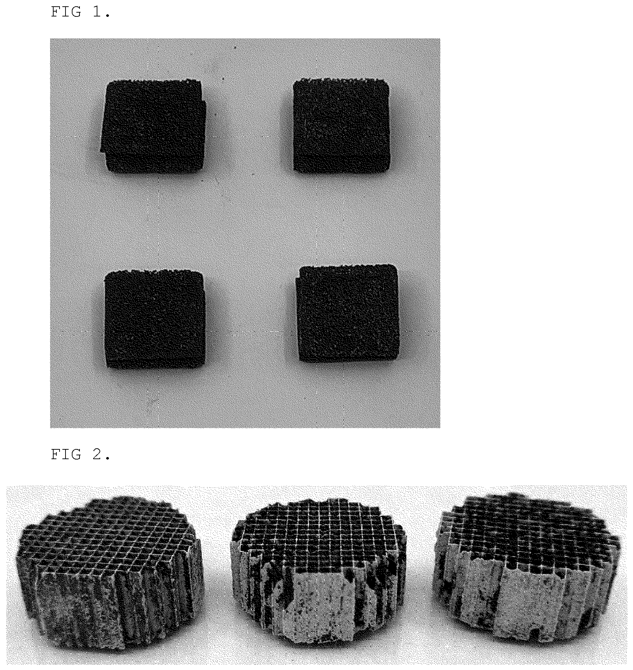

FIG. 1 illustrates a porous composite structure catalyst coated with a composite catalyst on a nickel foam.
FIG. 2 illustrates a porous composite structure catalyst coated with a composite catalyst on a monolithic honeycomb.

Best Mode for Invention

Unless otherwise defined, the technical and scientific terms used in this specification have the meaning commonly understood by a person of ordinary skill in the art to which this invention belongs, and the description of well-known functions and configurations that may unnecessarily obscure the gist of the present disclosure in the following description and accompanying drawings are omitted.

In addition, the singular form used in this specification may be intended to include the plural form unless specifically indicated in the context.

In addition, the units used in this specification without special mention are based on weight, and for example, the unit of % or ratio means weight % or weight ratio, and weight % means the weight % occupied by one component in the entire composition unless otherwise defined.

In addition, the numerical range used in this specification includes the lower limit and the upper limit and all values within that range, the increment logically derived from the shape and width of the defined range, all values that are double-limited, and all possible combinations of the upper and lower limits of the numerical ranges that are defined in different forms. In the specification of the present disclosure, unless otherwise specifically defined, values outside the numerical range that may occur due to experimental errors or rounding of values are also included in the defined numerical range.

The term 'include' in this specification is an open description having an equivalent meaning to expressions such as 'provided,' 'contain,' 'have,' 'characterized,' or the like and does not exclude elements, materials or processes that are not additionally listed.

The porous composite structure catalyst according to the present disclosure includes a porous substrate and a catalyst coating layer coated on the substrate, and the catalyst coating layer is characterized by including a porous support including mesopores and a composite catalyst that is a gold nanoparticle incorporated in the pores of the porous support.

The composite catalyst may be included in an amount of 1 to 50 parts by weight, specifically 5 to 20 parts by weight, relative to 100 parts by weight of the porous substrate. The above composite catalyst may be coated on the surface of the porous substrate to uniformly form a surface coating layer.

The composite catalyst may have an average particle diameter of 0.01 μm to 10 pm, specifically 0.05 μm to 5 pm, more specifically 0.1 pm to 5 pm, but is not limited thereto.

According to a detailed example, the porous substrate has a channel through which gas may pass inside, and specifically may be a monolithic honeycomb ceramic structure or a metal foam structure.

The honeycomb ceramic structure may be a structure having a plurality of gas flow channels, and the cross-section of the flow channels may have various shapes such as a polygon such as a quadrangle, a hexagon or the like, a circle, and the like, but may be selected without being limited to a specific shape.

The honeycomb ceramic structure may be any one or two or more selected from the group consisting of metal oxides, metalloid oxides, metal carbides, and metalloid carbides. Detailed examples thereof include, but are not limited to, alumina, silica, silicon carbide, and the like.

The metal foam structure may be a structure having open macropores, and the metal material may be used without limitation as long as it does not affect the catalytic activity.

The porous substrate may have various shapes such as spherical, cylindrical, polygonal shape or the like, but may be selected without being limited to a specific shape.

According to a detailed example, the catalyst coating layer includes a metal oxide unit layer in which a plurality of composite catalyst particles are dispersed, and the metal oxide unit layers may have a structure in which a plurality of unit layers are laminated in the thickness direction. The thickness of the unit layer may be 100 nm to 100 pm, but is not limited thereto. The metal oxide may be silica, alumina, or titania.

According to a non-limiting detailed example, the metal oxide may form a continuous phase in the metal oxide unit layer, the composite catalyst particles may form a dispersed phase, and the metal oxide may have porosity.

According to a detailed example, the catalyst coating layer may be manufactured from an operation of coating an aqueous slurry containing at least one binder selected from a group consisting of an inorganic sol binder and a water-soluble polymer binder and a composite catalyst powder on a porous substrate to form a coating layer; and an operation of sintering the porous substrate on which the coating layer is formed.

The aqueous slurry may have a weak acidity of pH 2 to 6. The average particle size of the inorganic sol binder may be 1 to 50 nm, and may be included in an amount of 1 to 20 parts by weight relative to 100 parts by weight of the composite catalyst powder.

According to a detailed example, the water-soluble polymer binder may be any one or two or more selected from the group consisting of polyethylene glycol, polyvinyl alcohol, and poly(N-vinyl pyrrolidone). The water-soluble polymer binder may be included in the aqueous slurry at 1 to 5 wt%. The weight average molecular weight of the water-soluble polymer binder may be 10,000 to 1,000,000 g/mol, but is not limited thereto.

According to a detailed example, the inorganic sol binder may be silica sol, titania sol, or alumina sol, but is not limited thereto.

According to a detailed example, the porous support may be a metal oxide or metalloid oxide porous support. The metal or metalloid of the metal oxide or metalloid oxide may be a metal or metalloid of Group 2 to Group 5, Group 7 to Group 9, and Group 11 to Group 14, and specifically, may be a metal or metalloid selected from Groups 2 to 4, Group 13, and Group 14, and more specifically, may be Al, Ti, Zr, or Si.

The porous support includes mesopores, and optionally may further include micropores. In the present disclosure, micropores mean that the average diameter of the internal pores is less than 2 nm, and mesopores mean that the average diameter of the internal pores is 2 nm to 50 nm.

The gold nanoparticles may be manufactured by a method known in the art or may use commercially available materials. Specifically, the gold nanoparticles may be manufactured by reducing a gold precursor present in a solution to gold according to a known method (Natan et al., Anal. Chem. 67, 735 (1995)). Examples of the gold precursor include, but are not limited to, a gold-containing halide, nitrate, acetate, acetylacetonate, ammonium salt, or the like. Specifically, the gold precursor may be $HAuCl_4$ or $HAuBr_4$, but is not limited thereto.

The diameter of the gold nanoparticles may be 1 to 20 nm, specifically 1 to 15 nm, more specifically 1 to 12 nm. The diameter of the preferred gold nanoparticles may be 1 to 10 nm, more preferably 1 to 8 nm.

According to a detailed example, the average diameter of the nanoparticles may be larger than the average diameter of the mesopores of the porous support. Accordingly, the crystal lattice of the gold nanoparticles incorporated into the mesopores of the porous support may be deformed, and the catalytic activity may be improved in the room temperature range.

According to a detailed example, the nanoparticles may be incorporated into all of the mesopores of the porous support or may be incorporated into some of the mesopores of the porous support, and specifically, may be incorporated into some of the mesopores of the porous support. More specifically, the nanoparticles may be irregularly incorporated into some of the mesopores of the porous support. At this time, the structure in which they are incorporated in the entire mesopores of the porous support means a superlattice structure, and specifically means a highly ordered superlattice structure having a face-centered cubic (FCC) symmetry. The form in which the nanoparticles are irregularly incorporated in some of the mesopores has the advantage that gas diffusion may be more effective than the superlattice structure.

According to a detailed example, the nanoparticles are incorporated in some of the mesopores of the porous support, and the mesopores in which the nanoparticles are not incorporated may be connected to each other as open pores. Since the composite catalyst has the nanoparticles incorporated only in some of the pores of the porous support, the diffusion of harmful gases may be more effective through the pores in which the nanoparticles are not incorporated and are connected to each other as open pores. Accordingly, even if gas is supplied at a high flow rate at room temperature, the reactant gas contained in the gas may be substantially all rapidly converted into product gas.

According to a detailed example, the gold nanoparticles may be included in an amount of 0.1 to 10 wt% of the total weight of the catalyst coating layer, specifically 0.5 to 7 wt%, more specifically 1 to 5 wt%.

According to a detailed example, the gold nanoparticles may be included in an amount of 0.005 to 3.5 wt% of the total weight of the porous composite structure catalyst, specifically 0.01 to 3 wt%, more specifically 0.05 to 2.5 wt% or 0.1 to 1.8 wt%.

According to a detailed example, the catalyst coating layer includes a porous support including mesopores and gold nanoparticles incorporated within the pores of the porous support, and a radial distribution function obtained by Fourier transforming an EXAFS (Extended X-ray absorption fine structure) spectrum may satisfy the following Formula 1.

[Formula 1]

$$(DH2/DH1) < 0.3$$

In the above formula 1, DH1 is the height of the peak at the interatomic distance D1, DH2 is the height of the peak at the interatomic distance D2, and D1 and D2 satisfy the following formula 2 and formula 3, respectively. Specifically, D1 and D2 are the interatomic distances of the maximum peak found in the range satisfying formula 2 and formula 3, respectively.

[Formula 2]

$$0.8 \leq (D1/D3) \leq 0.95$$

[Formula 3]

$$0.6 \leq (D2/D3) \leq 0.7$$

In the above formulas 2 and 3, D3 means the interatomic distance of the bulk Au-Au bond existing at 2.8 to 3.0 Å, and specifically, may be existing at 2.88 to 2.98 Å, and more specifically, may mean the standard interatomic distance of 2.90 Å. Specifically, D3 may mean the interatomic distance of the bulk Au-Au bond existing at 2.8 to 3.0 Å, obtained through peak deconvolution when the peak appears as one peak with asymmetry or has a bimodal peak. The above asymmetry means that although the peak has the shape of a single peak (unimodal peak), the left and right sides have asymmetry based on the center of the peak due to the overlapping of two peaks.

Specifically, (D1/D3) of the above formula 2 may be 0.85 to 0.92, and (D2/D3) of the above formula 3 may be 0.63 to 0.66.

According to a detailed example, in the above formula 1, DH1 may be the height of the peak with an interatomic distance of 2.57±0.2Å, and DH2 may mean the height of the peak with an interatomic distance of 1.8510.2Å. Specifically, DH1 may refer to the height of the peak at an interatomic distance of 2.57±0.1Å, and DH2 may refer to the height of the peak at an interatomic distance of 1.8510.1Å.

The above composite catalyst may significantly improve the catalytic activity as the height ratio of the peak at the interatomic distance D1 and the peak at the interatomic distance D2 satisfies less than 0.3.

EXAFS stands for extended X-ray absorption fine structure, and may analyze the radial distribution or coordination number of gold nanoparticles. For example, when a high-energy X-ray is irradiated on a gold atom, the gold atom contained in the gold nanoparticle emits electrons. Accordingly, a radial scattering wave is generated centered on the gold atom that absorbed the X-ray, and when the electron emitted from the gold atom that absorbed the X-ray reaches another adjacent atom (gold or oxygen atom), an electron is emitted from the other adjacent atom. At this time, a radial scattering wave is generated centered on the other adjacent atom.

The scattering wave generated centered on the gold atom that absorbed the X-rays and the scattering wave generated centered on another adjacent atom (gold or oxygen atom) interfere. At this time, a standing wave is obtained according to the distance between the gold atom absorbing the X-ray and another atom (gold or oxygen atom) adjacent to the gold atom. When the standing wave is Fourier transformed, a radial distribution having a peak according to the distance between the gold atom and another atom (gold or oxygen atom) adjacent to the gold atom is obtained. That is, a radial distribution having a peak according to the distance between gold (Au) atoms and gold (Au) atoms as well as a peak according to the distance between gold (Au) atoms and oxygen atoms having an Au-O bond when the gold (Au) atom has a bond with an oxygen atom may be obtained.

According to a detailed example, (DH2/DH1) of the above formula 1 may be 0.25 or less, more specifically 0.24 or less, and may be non-limitingly 0 or greater. Preferably, (DH2/DH1) of the above formula 1 may be 0.2 or less, and more preferably 0.15 or less. According to the above numerical range, the catalytic activity of the porous composite structure catalyst is significantly improved, which is preferable in that the reactant gas contained in the gas stream may be substantially all converted into the product gas remarkably quickly.

According to a detailed example, the catalyst coating layer may satisfy the following Formula 4 in the radial distribution function obtained by Fourier transforming the EXAFS (Extended X-ray absorption fine structure) spectrum.

$$[\text{Formula 4}]$$

$$(DA2/DA1) < 0.25$$

In the above Formula 4, DA1 is the area of the peak at the interatomic distance D1, DA2 is the area of the peak at the interatomic distance D2, and D1 and D2 satisfy Formulas 2 and 3, respectively.

In the above formula 4, DA1 may refer to the area of the peak at an interatomic distance of $2.57 \pm 0.2$ Å, and DA2 may refer to the area of the peak at an interatomic distance of $1.85 \pm 0.2$ Å. Specifically, DA1 may refer to the area of the peak at an interatomic distance of 2.5710.1 Å, and DA2 may refer to the area of the peak at an interatomic distance of 1.8510.1 Å.

Since the composite catalyst satisfies the area ratio of the peak at the interatomic distance D1 and the peak at the interatomic distance D2, being less than 0.25, the catalytic activity may be significantly improved.

According to a detailed example, (DA2/DA1) of the above formula 4 may be 0.2 or less, specifically 0.18 or less, more specifically 0.15 or less, and may be non-limitingly 0 or more. Preferably, (DA2/DA1) of the above formula 4 may be 0.1 or less, more preferably 0.08 or less. With the above numerical range, the catalytic activity of the porous composite structure catalyst is significantly improved, which is preferable in that the reactant gas contained in the gas stream may be substantially all converted into the product gas remarkably quickly.

According to a detailed example, the EXAFS (Extended X-ray absorption fine structure) spectrum may have a bimodal peak in the interatomic distance range of 2.2 to 3.0 Å in a radial distribution function obtained by Fourier transforming the above-mentioned spectrum, and the bimodal peak is caused by a bond between gold (Au) and gold (Au) atoms. Specifically, the interatomic distance range of 2.2 to 3.0 Å may be a range in which the distance between gold (Au) atoms and gold (Au) atoms is located, and means the distribution of the interatomic distance of Au-Au in a crystal lattice.

In the above interatomic distance range of 2.2 to 3.0 Å, typical gold nanoparticles may exhibit a single peak, and having a single peak means that the distance between gold (Au)-gold (Au) atoms is constant within the crystal lattice of the nanoparticles. However, having a bimodal peak may mean that different distances between gold (Au)-gold (Au) atoms exist within the crystal lattice, and although it has not been clearly identified, it is inferred that two different distances between gold (Au)-gold (Au) atoms are generated by deformation of the crystal lattice due to compressive stress. Having a bimodal peak in the above interatomic distance range of 2.2 to 3.0 Å may exhibit excellent catalytic activity even in a low-temperature region, and is preferable in that the reactant gas contained in a high-velocity gas stream may be substantially all converted into product gas very quickly.

According to a detailed example, the porous composite structure catalyst may be used for the oxidation reaction of carbon monoxide, an aldehyde compound, or a hydrocarbon compound. Accordingly, the porous composite structure catalyst according to the present disclosure may be preferably utilized as a solid-phase oxidizing agent for carbon monoxide, an aldehyde compound, or a hydrocarbon compound. The aldehyde compound may be acetaldehyde or formaldehyde, but is not limited thereto. The hydrocarbon compound may be an aliphatic or aromatic compound or a volatile organic compound (VOC), and examples thereof include methane, ethane, propane, butane, benzene, toluene, or xylene, but are not limited thereto.

The present disclosure provides a method for producing a gas stream comprising at least one harmful gas selected from the group consisting of carbon monoxide, an aldehyde compound, and a hydrocarbon compound; And an operation of contacting the porous composite structure catalyst as described above with the gas stream to oxidize the harmful gas; a method of removing a harmful gas including; The method of removing the harmful gas may more effectively cause an oxidation reaction in a gas stream with a high flow rate at room temperature by using the composite catalyst exhibiting remarkably excellent catalytic activity as described above.

In the operation of supplying the gas stream, the gas stream may be supplied at a space velocity in the range of 5,000 to 100,000 hr$^{-1}$, specifically 8,000 to 60,000 hr$^{-1}$, more specifically 10,000 to 30,000 hr$^{-1}$, but may be appropriately changed in consideration of the concentration of the harmful gas to be treated, the volume of the space containing the harmful gas, and the like. At this time, the space velocity is the flow rate of air passing through the catalyst per 1L of catalyst. The harmful gas may be effectively removed under the fast space velocity conditions of the above-described range.

According to a detailed example, the oxidation operation may be performed at 0°C to 60°C, specifically at 10°C to 50°C, more specifically at 20°C to 10°C, but is not limited thereto.

According to a detailed example, the harmful gas may be removed by the oxidation reaction at a removal rate of 90% or more under space velocity conditions of 12,000 hr$^{-1}$ or 24,000 hr$^{-1}$, and preferably at a removal rate of 95% or more. Specifically, the harmful gas may be removed at a removal rate of the above-described range in the above-described temperature range. At this time, the harmful gas may be carbon monoxide, and specifically, may be carbon monoxide at a concentration of 0.1% or more.

Specifically, carbon monoxide at a concentration of 1% may be removed with a removal rate of 70% or more, preferably 80% or more, and more preferably 90% or more, under a space velocity condition of 12,000 hr$^{-1}$. Specifically, the harmful gas may be removed with a removal rate of the above-described range in the temperature range described above.

The gas containing the harmful gas may contain oxygen at a certain content, for example, 2% or more, 4% or more, 10% or more, or non-limitingly 30% or less, for oxidation. For example, the gas containing carbon monoxide may be air, but is not limited thereto if it contains oxygen at a certain content or more.

Mode for Invention

Hereinafter, the present disclosure will be described in more detail using examples, but the examples below are provided only as examples to help understand the present disclosure, and the content of the present disclosure is not limited to the examples below.

(Production Example 1) Preparation of composite catalyst 1

[Operation 1]: Preparation of gold nanoparticles functionalized with a polymer

[Operation 1-1]: Gold nanoparticles stabilized with oleylamine are synthesized according to the following procedure.

First, olein amine was selected as a stabilizer, and a solution composed of 60 ml of tetralin, 60 ml of olein amine, and 0.6 g of HAuCl.H2O was prepared by stirring at room temperature for 10 minutes. 6 mmol of TBAB (tetrabutylammonium bromide), 6 ml of tetralin, and 6 ml of oleyl amine were mixed by ultrasonic grinding, and then quickly added to the solution. And the above solution was stirred at room temperature for 1 hour, ethanol was added, and centrifuged to precipitate gold nanoparticles. The gold nanoparticle precipitate was redispersed with hexane, ethanol was added, and centrifuged. The manufactured gold nanoparticles showed an average particle diameter of 4 nm, and the manufactured gold nanoparticles were dispersed in 100 ml of toluene as formed.

[Operation 1-2]: The surface of the gold nanoparticles was functionalized with thiolated PEG using the following method.

In the above operation 1-1, the gold nanoparticles dispersed in toluene were diluted by adding an additional 100 ml of tetrahydrofuran, and a thiolated polymer was selected to functionalize the surface of the gold nanoparticles by binding the polymer, and 1g of monofunctional polyethylene glycol (aSH-PEG, weight average molecular weight: lkDa) whose terminal is substituted with a thiol group was added. After stirring, hexane was added, and centrifugation was performed to precipitate the gold nanoparticles functionalized with PEG (4-Au-PEG). The 4-Au-PEG obtained by precipitation was dried and dispersed in water.

[Operation 2] Preparation of porous silica encapsulating PEG-functionalized gold nanoparticles

0.088 g of 4-Au-PEG prepared in the above operations 1-2 was mixed with 0.396 g of Plutonic F127 as an activator and uniformly dispersed in 10 ml of a 1.6M HC1 aqueous solution, and then 1.49 g of tetraethyl orthosilicate (TEOS) was added to the dispersion. Then, the dispersion of the mixture was stirred for 15 minutes and maintained at room temperature for 40 hours without stirring to prepare a red precipitate. The red precipitate thus formed corresponds to the porous silica encapsulating PEG-functionalized gold nanoparticles.

[Operation 3]: Preparation of a composite catalyst

The red precipitate prepared in the previous operation was washed with water and dried, and then calcined stepwise at 250°C for 3 hours, 400°C for 2 hours, and 500°C for 2 hours to remove PEG and Pluronic F127 polymers, thereby preparing a porous silica composite catalyst with gold nanoparticles captured therein.

(Preparation Example 2) Preparation of composite catalyst 2

The same operations were performed in operation 1-1 of the above Preparation Example 1, except that the molar ratio of oleinamine and HAuCl.H2O was adjusted to prepare gold nanoparticles having an average particle size of 10 nm, thereby preparing a porous silica composite catalyst 2 with gold nanoparticles captured therein.

(Production Example 3) Production of composite catalyst 3

The same operations 1 and 2 were performed except that the molar ratio of oleinamine and HAuCl.H2O in operation 1-1 of the above Production Example 1 was adjusted to produce gold nanoparticles having an average particle size of 12 nm. In operation 3, the red precipitate produced in the previous operation was washed with water, dried, and calcined at 450°C to remove PEG and Pluronic F127 polymers, thereby producing a composite catalyst 3, which is a porous silica with gold nanoparticles captured therein.

(Production Example 4) Production of composite catalyst 4

The same operations 1 and 3 were performed except that operation 2 of the above Production Example 1 was performed as follows, thereby producing a composite catalyst 4.
For the production of porous alumina encapsulating PEG-functionalized gold nanoparticles in operation 2, first, 0.15g of PEG-functionalized gold nanoparticles (4-Au-PEG) and 0.675g of Pluronic F127 were prepared, and then uniformly dispersed in a mixed solution of 0.8 ml of nitric acid (68%) and 40 ml of ethanol. Then, 0.81 g of aluminum ethoxide was added to the dispersion. Then, the dispersion of the mixture was stirred for 3 hours, maintained at room temperature for 24 hours without stirring, and then dried at 60°C for 3 hours to produce a red solid. Thereafter, operation 3 of Preparation Example 1 was performed in the same manner to produce a porous alumina composite catalyst 4 encapsulating gold nanoparticles.

(Manufacturing Example 5) Manufacturing of composite catalyst 5

Composite catalyst 5 was manufactured by performing operations 1 and 3 in the same manner as above, except that operation 2 of the above Manufacturing Example 1 was performed as follows.
For the manufacturing of porous titania in which PEG-functionalized gold nanoparticles were captured in operation 2, first, 0.10 g of PEG-functionalized gold nanoparticles (4-Au-PEG) and 0.44 g of Pluronic F127 were prepared, and uniformly dispersed in a mixed solution of 0.68 ml of 37% hydrochloric acid and 17.05 ml of ethanol, and then 2.28 g of titanium tetraisopropoxide was added to the dispersion. Then, the dispersion of the above mixture was stirred for 3 hours, maintained at room temperature without stirring for 24 hours, and then dried at 60°C for 3 hours to produce a red solid. After that, operation 3 of Manufacturing Example 1 was performed in the same manner to produce a composite catalyst 5 comprising porous titania having gold nanoparticles captured therein.

(Comparative Manufacturing Example 1) Preparation of composite catalyst 6

Gold nanoparticles stabilized with oleylamine were prepared as follows according to a known method (Y. Lee, A. Loew, S. Sun, Chem. Mater. 2010, 22, 755). The synthesized gold nanoparticles 0.01g were dispersed in 1 ml of chloroform and mixed with 15 g of a 0.67 wt% aqueous solution of Pluronic F127. The mixture was sonicated for 30 minutes to allow the chloroform containing the gold nanoparticles to be inserted into the hydrophobic core of the spherical micelles of F127. The chloroform in the emulsion was evaporated in vacuo, and the resulting solution was freeze-dried. The dried mixture of lg was uniformly dispersed in 30 ml of a 1.6-M HCl aqueous solution, and 2.1 g of TEOS was added to the dispersion. The dispersion of the mixture was stirred for 15 minutes and maintained at room temperature for 40 hours without stirring to produce a pink solid precipitate. The produced solid precipitate was washed with water, dried, and then calcined at 450 °C under helium gas to remove F127, thereby producing a composite catalyst 6 of SBA-16 entrapping gold nanoparticles having an average particle size of 4 nm. SBA-16 is a mesoporous silica in which spherical mesopores are filled according to bcc symmetry.

(Example 1) Preparation of porous composite structure catalyst 1

The composite catalyst 1 prepared in the above Preparation Example 1 was mixed in an aqueous solution to 10 wt% and milled to prepare a dispersion. The average particle size of the milled composite catalyst powder was 0.8 pm. An inorganic binder silica sol having an average particle size of 32 nm, adjusted to a pH of 4 by adding acetic acid to the dispersion, was mixed in to the dispersion to 1 wt%. Then, an organic binder, poly(N-vinyl pyrrolidone), was mixed in to the dispersion to 2 wt% to prepare a coating slurry.

A nickel foam measuring 10 cm x 10 cm x 10 cm was immersed in the above coating slurry for 1 minute, then taken out, and any excessive slurry was blown out to remove it, and then sufficiently dried. The immersion and drying process was repeated 10 times, and the nickel foam, whose coating was completed, was placed in a high-temperature furnace and then calcined at 450°C for 4 hours to finally manufacture a porous composite structure catalyst 1.

(Example 2) Manufacturing of a porous composite structure catalyst 2

A porous composite structure catalyst 2 was manufactured in the same manner as in Example 1, except that the composite catalyst 2 manufactured in Manufacturing Example 2 was used instead of the composite catalyst 1 manufactured in Manufacturing Example 1.

(Example 3) Preparation of porous composite structure catalyst 3

Porous composite structure catalyst 3 was prepared in the same manner as in Example 1, except that composite catalyst 3 prepared in Preparation Example 3 was used instead of composite catalyst 1 prepared in Preparation Example 1.

(Example 4) Preparation of porous composite structure catalyst 4

Porous composite structure catalyst 4 was prepared in the same manner as in Example 1, except that composite catalyst 4 prepared in Preparation Example 4 was used instead of composite catalyst 1 prepared in Preparation Example 1.

(Example 5) Preparation of porous composite structure catalyst 5

Porous composite structure catalyst 5 was prepared in the same manner as in Example 1 except that composite catalyst 1 prepared in Manufacturing Example 1 was used instead of composite catalyst 5 prepared in Manufacturing Example 5.

(Example 6) Preparation of porous composite structure catalyst 6

Porous composite structure catalyst 6 was prepared in the same manner as in Example 1 except that a monolithic honeycomb formed of Cordierite material was used instead of nickel foam.

(Comparative Example 1) Preparation of porous composite structure catalyst 7

Porous composite structure catalyst 7 was prepared in the same manner as in Example 1 except that composite catalyst 6 prepared in Comparative Manufacturing Example 1 was used instead of composite catalyst 1 prepared in Manufacturing Example 1.

(Experimental Example 1) EXAFS (Extended X-ray absorption fine structure) analysis

EXAFS (Extended X-ray absorption fine structure) measurement was performed using the 4C and 10C beamlines of the Pohang Accelerator (PLS-II) . The EXAFS spectrum was Fourier transformed to obtain the radial distribution function.

As a result of analyzing the radial distribution function of the composite catalysts according to Preparation Examples 1 to 5, a peak due to Au-O bonding was observed in the range of 1.4 to 1.7 Å in all cases. From this, it may be confirmed that the proximity between the surface of the gold nanoparticle and the porous silica capturing it provides a condition for forming a stable Au-O bond at the interface between the gold nanoparticle and the porous support, thereby forming Au-O-Si, Au-O-Al, or Au-O-Ti.

In addition, in all of Manufacturing Examples 1 to 5, a peak due to bulk Au-Au bonding was observed in the 2.8 to 3.0 Å range, and when the interatomic distance of this peak is referred to as D3, the peak of the radial distribution function was defined based on D3. Specifically, D1 and D2 are the interatomic distances of the maximum peaks found in the range satisfying Formulas 2 and 3 below, respectively, and the positions of D1, D2, and D3 are shown in Table 1. In addition, the ratios of the height (DH1) and area (DA1) of the peak of the interatomic distance D1 and the height (DH2) and area (DA2) of the peak of the interatomic distance D2 were calculated and shown in Table 1.

[Formula 2]

$$0.8 \leq (D1/D3) \leq 0.95$$

[Formula 3]

$$0.6 \leq (D2/D3) \leq 0.7$$

[Table 1]

|  | Manufactu ring Example 1 | Manufactu ring Example 2 | Manufactu ring Example 3 | Manufactu ring Example 4 | Manufactu ring Example 5 |
|---|---|---|---|---|---|
| DH2/DH1 | 0 | 0.227 | 0.335 | 0 | 0 |
| DA2/DA1 | 0 | 0.129 | 0.227 | 0 | 0 |
| D1 | 2.5522Å | 2.5893Å | 2.567Å | 2.5607Å | 2.5939Å |
| D2 | - | 1.8471Å | 1.848Å | - | - |
| D3 | 2.906Å | 2.8967Å | 2.8177Å | 2.9601Å | 2.9526Å |
| D1/D3 | 0.8783 | 0.894 | 0.911 | 0.8651 | 0.8785 |
| D2/D3 | - | 0.638 | 0.656 | - | - |

(Experimental Example 2) Carbon monoxide oxidation characteristics

Carbon monoxide (CO) oxidation was performed in a tubular reactor with both sides open. The porous composite structure catalyst according to the embodiment of the present disclosure was installed in the middle of the tubular reactor, carbon monoxide-containing gas was supplied to one side of the reactor, and the other side of the reactor was connected to an infrared measurement-type continuous gas analyzer (Siemens, ULTRAMAT 23) to measure the carbon monoxide concentration. The carbon monoxide-containing gas used was 0.1% or 1% of CO, 10% of $O_2$, and the remainder He, and the concentration of carbon monoxide discharged from the other side of the reactor was measured while controlling the supply flow rate at room temperature (20 °C). These measurements were performed using the porous composite structure catalysts according to Examples 1 to 3, and the carbon monoxide removal rates according to the concentration of carbon monoxide introduced and the space velocity (=supply flow rate per 1 L of catalyst) are shown in Table 2.

[Table 2]

|  | CO 0.1%, 12,000 hr$^{-1}$ | CO 0.1%, 24,000 hr$^{-1}$ | CO 1%, 12,000 hr$^{-1}$ |
|---|---|---|---|
| Example 1 | 100% | 100% | 97% |
| Example 2 | 100% | 77% | 81% |
| Example 3 | 100% | 61% | 62% |
| Comparative Example 1 | 0% | 0% | 0% |

Referring to Table 2, all of Examples 1 to 3 showed a removal rate of 100% under the conditions of carbon monoxide concentration of 0.1% and space velocity of 12,000 hr$^{-1}$, indicating that carbon monoxide was completely removed even though air was simply circulated through a pump at room temperature.
On the other hand, under the conditions of a higher space velocity of 24,000 hr$^{-1}$, Examples 1 and 2 showed removal rates of 100% and 77%, respectively, effectively removing carbon monoxide compared to Example 3. In particular, Example 1 showed a removal rate of 90% under conditions of higher carbon monoxide concentration.
On the other hand, it was confirmed that Comparative Example 1 did not properly perform the role of a catalyst for carbon monoxide oxidation at room temperature.
Through this, it may be seen that the porous composite structure catalyst according to an embodiment may effectively remove harmful gases contained in air even when air containing harmful substances is supplied at a high flow rate at room temperature.

As described above, the present disclosure has been described by specific matters and limited embodiments and drawings, but these are provided only to help a more general understanding of the present disclosure, and the present disclosure is not limited to the above embodiments, and those with ordinary knowledge in the field to which the present disclosure pertains may make various modifications and variations from this description.

Therefore, the idea of the present disclosure should not be limited to the described embodiments, and not only the scope of the patent claims described below, but also all things that are equivalent or have equivalent variations to the scope of the patent claims are said to fall within the scope of the idea of the present disclosure.

## Claims

1. A porous composite structure catalyst comprising:

   a porous substrate and a catalyst coating layer coated on the substrate,
   wherein the catalyst coating layer includes a porous support including mesopores and a composite catalyst, a gold nanoparticle contained within pores of the porous support.

2. The porous composite structure catalyst of claim 1, wherein the porous substrate is a monolithic honeycomb ceramic structure or a metal foam structure.

3. The porous composite structure catalyst of claim 2, wherein the honeycomb ceramic structure is any one or two or more selected from the group consisting of a metal oxide, a metalloid oxide, a metal carbide, and a metalloid carbide.

4. The porous composite structure catalyst of claim 1, wherein the catalyst coating layer comprises a metal oxide unit layer in which a plurality of composite catalyst particles are dispersed, and the metal oxide unit layer is provided by laminating a plurality of layers on each other in a thickness direction.

5. The porous composite structure catalyst of claim 1, wherein the catalyst coating layer is manufactured from,

   an operation of forming a coating layer by coating an aqueous slurry containing one or more binders selected from the group consisting of an inorganic sol binder and a water-soluble polymer binder and a composite catalyst powder on the porous substrate; and
   an operation of sintering the porous substrate on which the coating layer is formed.

6. The porous composite structure catalyst of claim 5, wherein the water-soluble polymer binder is any one or two more selected from the group consisting of polyethylene glycol, polyvinyl alcohol, and poly(N-vinyl pyrrolidone).

7. The porous composite structure catalyst of claim 1, wherein the porous support is a metal oxide or metalloid oxide porous support.

8. The porous composite structure catalyst of claim 1, wherein a diameter of the nanoparticle is 1 to 20 nm.

9. The porous composite structure catalyst of claim 1, wherein a radial distribution function obtained by Fourier transforming an EXAFS (Extended X-ray absorption fine structure) spectrum of the catalyst coating layer satisfies the following Formula 1:

$$[\text{Formula 1}]$$

$$(DH2/DH1) < 0.3,$$

wherein in the Formula 1, DH1 is a height of a peak at an interatomic distance D1, DH2 is a height of a peak at an interatomic distance D2, and D1 and D2 satisfy the following Formulas 2 and 3, respectively:

$$[\text{Formula 2}]$$

$$0.8 \leq (D1/D3) \leq 0.95,$$

[Formula 3]

$$0.6 \leq (D2/D3) \leq 0.7,$$

wherein in the Formulas 2 and 3, D3 represents an interatomic distance of a bulk Au-Au bond existing at 2.8 to 3.0 Å.

10. The porous composite structure catalyst of claim 1, wherein a radial distribution function obtained by Fourier transforming an EXAFS (Extended X-ray absorption fine structure) spectrum of the catalyst coating layer satisfies the following Formula 4:

[Formula 2]

$$(DA2/DA1) < 0.25,$$

wherein in the formula 4, DA1 is an area of a peak at an interatomic distance D1, DA2 is an area of a peak at an interatomic distance D2, and D1 and D2 satisfy the formulas 2 and 3, respectively.

11. The porous composite structure catalyst of claim 1, wherein a bimodal peak is provided in an interatomic distance range of 2.2 to 3.0 Å in a radial distribution function obtained by Fourier transforming an EXAFS (Extended X-ray absorption fine structure) spectrum of the catalyst coating layer.

12. The porous composite structure catalyst of claim 1, wherein the porous composite structure catalyst is for an oxidation reaction of carbon monoxide, an aldehyde compound, or a hydrocarbon compound.

13. A method of removing a harmful gas, comprising:

an operation of supplying a gas stream containing at least one harmful gas selected from the group consisting of carbon monoxide, aldehyde compounds, and hydrocarbon compounds; and
an operation of contacting the porous composite structure catalyst according to any one of claims 1 to 12 with the gas stream and oxidizing the harmful gas.

14. The method of removing a harmful gas of claim 13, wherein the oxidizing is performed at 0°C to 60°C.

15. The method of removing a harmful gas of claim 13, wherein the harmful gas is removed at a removal rate of 90% or higher under a space velocity condition of 12,000 hr$^{-1}$ by an oxidation reaction.

FIG 1.

FIG 2.

| | INTERNATIONAL SEARCH REPORT | International application No. |
|---|---|---|
| | | **PCT/KR2023/004090** |

**A.  CLASSIFICATION OF SUBJECT MATTER**

**B01J 35/00**(2006.01)i; **B01J 35/04**(2006.01)i; **B01J 35/10**(2006.01)i; **B01J 23/52**(2006.01)i; **B01J 37/02**(2006.01)i; **B01J 37/08**(2006.01)i; **B01D 53/86**(2006.01)i

According to International Patent Classification (IPC) or to both national classification and IPC

**B.  FIELDS SEARCHED**

Minimum documentation searched (classification system followed by classification symbols)

B01J 35/00(2006.01); B01D 53/04(2006.01); B01D 53/62(2006.01); B01D 53/86(2006.01); B01D 53/88(2006.01); B01J 23/48(2006.01); B01J 23/89(2006.01); B01J 37/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 나노입자(nanoparticle), 다공성(porosity), 모노리틱(monolithic), 허니콤(honeycomb), 금속(metal), 코팅(coating), 일산화탄소 산화(carbon monoxide oxidation)

**C.  DOCUMENTS CONSIDERED TO BE RELEVANT**

| Category* | Citation of document, with indication, where appropriate, of the relevant passages | Relevant to claim No. |
|---|---|---|
| Y | KR 10-2021-0124485 A (QUANTUM CAT CO., LTD.) 14 October 2021 (2021-10-14)<br>See paragraphs [0028], [0048]-[0076], [0093]-[0099] and [0125]-[0128], and figures 1 and 15. | 1-15 |
| Y | KR 10-2020-0117559 A (KOREA INSTITUTE OF MACHINERY & MATERIALS) 14 October 2020 (2020-10-14)<br>See paragraphs [0014]-[0016] and [0034], and claim 1. | 1-15 |
| Y | KR 10-2018-0035118 A (KOREA ADVANCED INSTITUTE OF SCIENCE AND TECHNOLOGY) 05 April 2018 (2018-04-05)<br>See paragraphs [0101]-[0111], claims 1-14, and figures 35 and 36. | 1-15 |
| Y | JP 5860415 B2 (CORNING INC. et al.) 16 February 2016 (2016-02-16)<br>See paragraphs [0002]-[0030], and claims 1-3. | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 June 2023** | **28 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004090**

**C.    DOCUMENTS CONSIDERED TO BE RELEVANT**

| Category* | Citation of document, with indication, where appropriate, of the relevant passages | Relevant to claim No. |
|---|---|---|
| A | MA, Y. et al. Adsorption and Catalytic Activity of Gold Nanoparticles in Mesoporous Silica: Effect of Pore Size and Dispersion Salinity. The Journal of Physical Chemistry C. 2022, vol. 126, pp. 2531-2541 (publication date: 26 January 2022). See abstract, and pages 2533-2535. | 1-15 |

Form PCT/ISA/210 (second sheet) (July 2022)

INTERNATIONAL SEARCH REPORT
Information on patent family members

International application No.

**PCT/KR2023/004090**

| Patent document cited in search report | | | Publication date (day/month/year) | Patent family member(s) | | | Publication date (day/month/year) |
|---|---|---|---|---|---|---|---|
| KR | 10-2021-0124485 | A | 14 October 2021 | CN | 113613786 | A | 05 November 2021 |
| | | | | EP | 3936231 | A1 | 12 January 2022 |
| | | | | JP | 2022-528253 | A | 09 June 2022 |
| | | | | US | 2022-0016602 | A1 | 20 January 2022 |
| | | | | WO | 2020-197026 | A1 | 01 October 2020 |
| | | | | WO | 2020-197200 | A1 | 01 October 2020 |
| KR | 10-2020-0117559 | A | 14 October 2020 | KR | 10-2215524 | B1 | 15 February 2021 |
| | | | | WO | 2020-204265 | A1 | 08 October 2020 |
| KR | 10-2018-0035118 | A | 05 April 2018 | KR | 10-2025438 | B1 | 25 September 2019 |
| | | | | US | 11565245 | B2 | 31 January 2023 |
| | | | | US | 2019-0255520 | A1 | 22 August 2019 |
| | | | | WO | 2018-062646 | A2 | 05 April 2018 |
| | | | | WO | 2018-062646 | A3 | 02 August 2018 |
| JP | 5860415 | B2 | 16 February 2016 | CN | 103002985 | A | 27 March 2013 |
| | | | | CN | 103002985 | B | 01 April 2015 |
| | | | | EP | 2539069 | A1 | 02 January 2013 |
| | | | | EP | 2539069 | B1 | 10 August 2016 |
| | | | | JP | 2013-520317 | A | 06 June 2013 |
| | | | | US | 2011-0204293 | A1 | 25 August 2011 |
| | | | | US | 9139433 | B2 | 22 September 2015 |
| | | | | WO | 2011-106213 | A1 | 01 September 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190255520 A1

- KR 101789665 B1

**Non-patent literature cited in the description**

- **NATAN et al.** *Anal. Chem.*, 1995, vol. 67, 735

- **Y. LEE** ; **A. LOEW** ; **S. SUN**. *Chem. Mater.*, 2010, vol. 22, 755